# EUROPEAN PATENT APPLICATION

(11) **EP 1 478 043 A1**
(43) Date of publication of application: **17.11.2004**
(21) Application number: 04011218.7
(22) Date of filing: 11.05.2004
(51) Int. Cl.: H01M 8/02, H01M 8/24

(54) **Polymer electrolyte fuel cell and its replacement method**

(30) Priority: 13.05.2003 JP 2003134006
(71) Applicant: MATSUSHITA ELECTRIC INDUSTRIAL CO., LTD., Kadoma-shi, Osaka 571-8501 (JP)
(72) Inventor: Yasumoto, Eiichi, Sorakugun Kyoto 619-0238 (JP); Ohara, Hideo, Katano-shi Osaka 576-0016 (JP); Kusakabe, Hiroki, Sakai-shi Osaka 590-0113 (JP)
(74) Representative: Schirdewahn, Jürgen, Dr.

(57) **Abstract**

To provide a fuel cell with a simple configuration such that, when a defective single cell is found among the laminated cells, a groove is provided between adjacent separators on a side, in the direction of fuel cell lamination. As a result, it is possible to provide a fuel cell that facilitates the replacement of defective cells, simply by processing into a separator shape with an extremely simple configuration.

## Description

### [Technical Field of the Invention]

The present invention relates to a fuel cell, particularly a polymer electrolyte fuel cell, that is used as a portable power supply, a power supply for an electric vehicle, a home cogeneration system, etc., as well as its replacement method.

### [Prior Art]

The polymer electrolyte fuel cell simultaneously generates electricity and heat by electrochemically reacting a fuel gas (e.g., hydrogen) and an oxidizing gas (e.g., air), by means of gas diffusion electrodes. Such a polymer electrolyte fuel cell is composed basically of a polymer electrolyte membrane that selectively transports hydrogen ions and a pair of electrodes that enclose the polymer electrolyte membrane. The principal component of the electrodes is carbon powder that supports a platinum-group metal catalyst, and the electrodes are composed of a catalyst layer adhered to the polymer electrolyte membrane and a diffusion layer that is arranged on its outer surface and that combines both air permeability and conductivity. A gasket is disposed at the periphery of the polymer electrolyte membrane. A membrane-electrode assembly (MEA) with such a composition is fastened mechanically, and conductive separators for electrically interconnecting in series adjacent MEAs are disposed outside the MEA. The conductive separator has gas flow channels for supplying reactant gas to the side facing the electrode and for carrying away the gas generated by the reaction as well as the excess gas. A gas flow channel could be provided separately from the separator. In the typical method, however, a groove provided in the side of the separator is used as the gas flow channel.

On the other side of the separator is provided the coolant flow channel that circulates the cooling water for maintaining a constant cell temperature. The thermal energy generated by the reaction could be utilized in the form of hot water, etc., by circulating the cooling water in this manner.
Also, a gasket and O-ring are disposed in the periphery of the electrode so as to enclose the polymer electrolyte membrane, so that the fuel gas and oxidant gas do not leak from the cell and intermix, and, furthermore, so that the cooling water does not leak from the cell.

In such a laminate cell, the usual type of manifold is the so-called internal manifold that keeps inside the laminate cell the gas supply and discharge holes as well as the cooling water supply and discharge holes.

In the case of a polymer electrolyte fuel cell such as the aforementioned, the components (e.g., separators, MEAs) are laminated successively, after which the entire stack is fastened to reduce the electrical contact resistance and to prevent leakage of the supply gas and cooling water.

Here, the greater the number of laminated single cells, the more difficult it is to laminate without displacement, which would result in a defective seal, etc. Also, if a defective single cell is found in a part of the laminated fuel cell, in order to replace this cell, it is necessary to successively remove the laminated components up to the location of this cell.

As an example of the prior art, a method that uses a dowel pin to prevent laminated component displacement has been disclosed in the Publication of Unexamined JP Patent Application No. 9-134734. In another method disclosed in the Publication of Unexamined JP Patent Application No. 2000-48849, displacement during lamination is prevented by providing a notch on at least one side of the laminated components, so even if a defective single cell occurs after lamination, the defective single cell is replaced without displacement.

### [Problems That the Invention Is to Solve]

However, the method that uses a dowel pin has a problem: Although it is effective in preventing displacement during cell lamination, the dowel pin remains in the cell after assembly, thereby increasing the size and weight of the fuel cell. Moreover, when a defective single cell is found, the aforementioned dowel pin is present within the cell, so it is impossible to remove the defective single cell only. As aforementioned, it is necessary to successively remove the laminated components up to the location of this cell, so numerous man-hours are required for cell replacement. Furthermore, if there is little clearance between the dowel pin and the location hole, this operation is complicated further. Also, when this operation is performed, it is necessary to remove up to a normal cell, so there is a risk of introducing a new problem (e.g., a defective seal).

In the method that provides a notch, it is possible to prevent displacement during cell lamination, without using a dowel pin. Moreover, a dowel pin is not used, so even in the event of a defective single cell in part of a manufactured fuel cell, it is fastened by means of a guidepost disposed in the notch, thereby enabling replacement of only the defective single cell by using a lifting jig. In the above mentioned Publication of Unexamined JP Patent Application No. 2000-48849, however, adjacent separators are tightly adhered, so it is very difficult to insert a lifting jig between the separators adjacent to the defective single cell to be replaced. In this Publication, the guidepost enables more precise positioning, so the sides of the fuel cells are extremely flush, which increases the difficulty of jig insertion. Also, laminated cells fastened at a constant pressure for a long time adhere to the separators after deformation of the gasket, O-ring, etc., used as structural elements. Therefore, when an attempt is made to forcibly insert a lifting jig, there also is danger of breaking part of the adjacent separators, which would necessitate the needless replacement of a laminated component.

As aforementioned, there is demand for a fuel cell with a simple structure as well as a method of replacing its cells, such that, when a defective single cell is found among the laminated cells, it is possible to remove and replace only this cell as simply as possible without breaking a laminate element.

### [Means of Solving the Problems]

To solve such problems, the polymer electrolyte fuel cell of the present invention is characterized by the features of claims 1 to 13.

The fuel cell replacement method of the present invention is characterized by the features of claims 14 and/or 15.

### [Modes for Carrying Out the Invention]

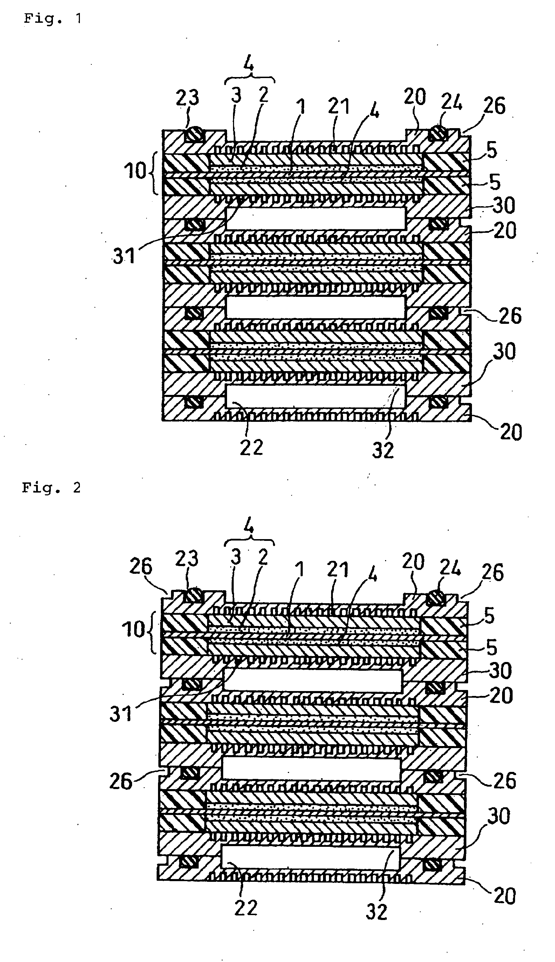

Figure 1 shows the vertical, schematic, cross-sectional view of the fuel cell of Embodiment 1.

Membrane-electrode assembly (MEA) 10 is composed of polymer electrolyte membrane 1, a pair of electrodes 4 that encloses it, and gasket 5 that encloses the periphery of the polymer electrolyte membrane. Electrode 4 is composed of catalyst layer 2 that contacts polymer electrolyte membrane 1 as well as diffusion layer 3. A single cell is formed by enclosing this MEA 10 between cathode-side separator 20 having gas flow channel 21 that supplies oxidant gas to one electrode (i.e., the cathode) and anode-side separator 30 having gas flow channel 31 that supplies fuel gas to the other electrode (i.e., the anode). Cathode-side separator 20 and anode-side separator 30 have flow channels 22 and 32, respectively, on their rear sides. The cooling water flow channel is formed between separators 20 and 30 of adjacent single cells, by aforementioned flow channels 22 and 32. Cathode-side separator 20 and anode-side separator 30 prevent the cooling water from leaking out, by utilizing the fastening pressure of the cells to compress O-ring 24 mounted in depression 23 of cathode-side separator 20.

The aforementioned structure is identical to that of a conventional fuel cell. In the present embodiment, rectangular cathode-side separator 20 is characterized in that depressions are provided at the edges of the side facing similarly rectangular anode-side separator 30, and groove 26 for inserting the cell replacement jig is formed between it and separator 30. In Figure 1, a groove is provided on one side of the rectangular separators. As shown in Figure 2, however, it is preferable to provide groove 26 in two opposing sides, which is effective when replacing a defective single cell. Grooves also may be provided in three or more sides. In the embodiment shown in Figure 3, groove 26A is formed straddling adjacent separators 20 and 30. In all these examples, the grooves are rectangular. In the embodiment shown in Figure 4, wedge-shaped groove 26B is formed similarly straddling separators 20 and 30.

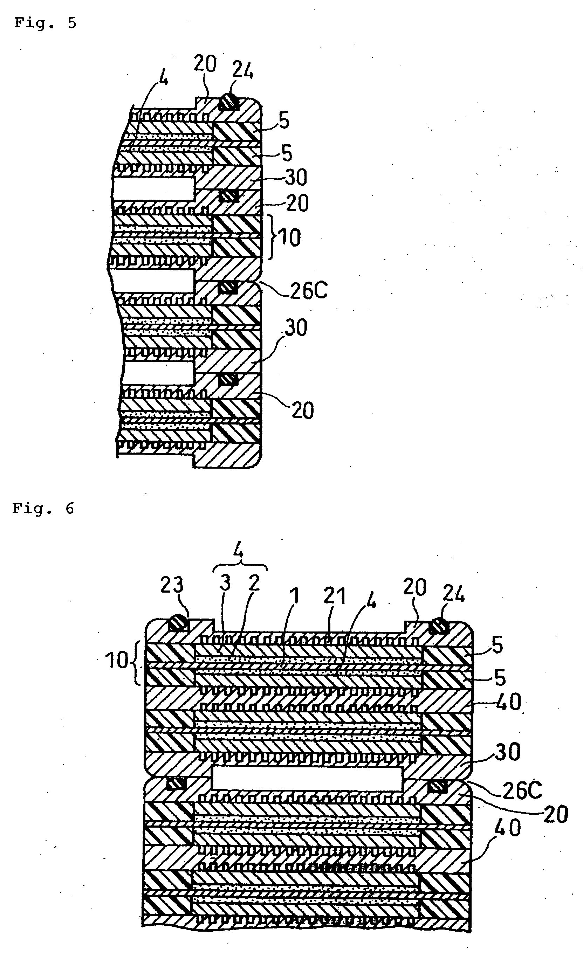

In the aforementioned examples, a groove was provided between each single cell. As shown in Figure 5, however, a groove may be provided every few single cells (e.g., every other single cell). For example, grooves may be provided only in the central region, where cell replacement is difficult, without providing grooves at the top and bottom ends of the fuel cell stack, where replacement is relatively easy. In the present embodiment, the corners of groove 26C were subjected to radial milling to form smoothly curved sides.

In the aforementioned embodiment, each single cell is equipped with independent cathode-side and anode-side separators. That is, it is configured such that a compound separator that combines a cathode-side separator and an anode-side separator is inserted between MEAs, so each single cell is cooled by both the cathode-side and anode-side surfaces. In the embodiment shown in Figure 6, the aforementioned compound separator and single separator 40 are inserted alternately between MEAs. One side of separator 40 functions as the cathode-side separator, and the other side functions as the anode-side separator. When this configuration is adopted, a cooling block is provided every two single cells. In the present embodiment, it is possible to replace two single cells as one unit.

If, as aforementioned, a groove is provided between adjacent separators on at least one side in the fuel cell lamination direction, not only does this facilitate replacement of a defective single cell, but it can reduce the amount of separator material, thereby enabling cost reduction. The separator material is not limited to carbon, but also could be a metal or a resin-metal composite, etc.

Also, in the aforementioned examples, groove processing is performed between adjacent separators on at least one side of a planar separator, but it is not limited thereto. That is, groove processing also may be performed on the side of the planar separator that contacts the MEA. This enables further cost reduction.

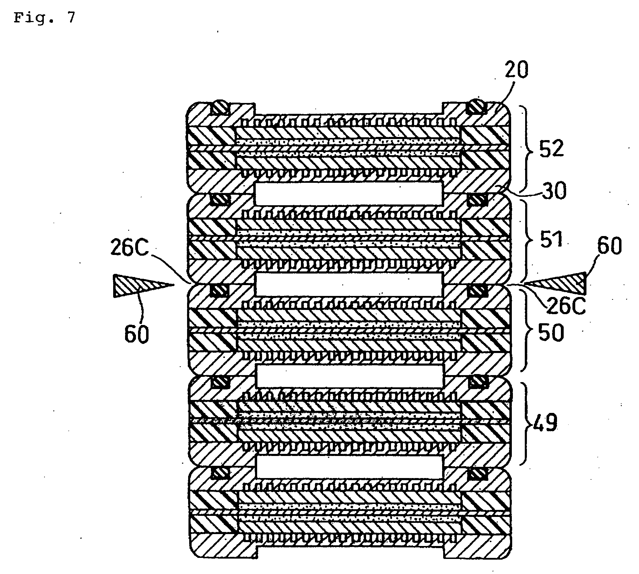

Next, the method of replacing a defective cell in such a fuel cell will be explained with reference to Figures 7-12.

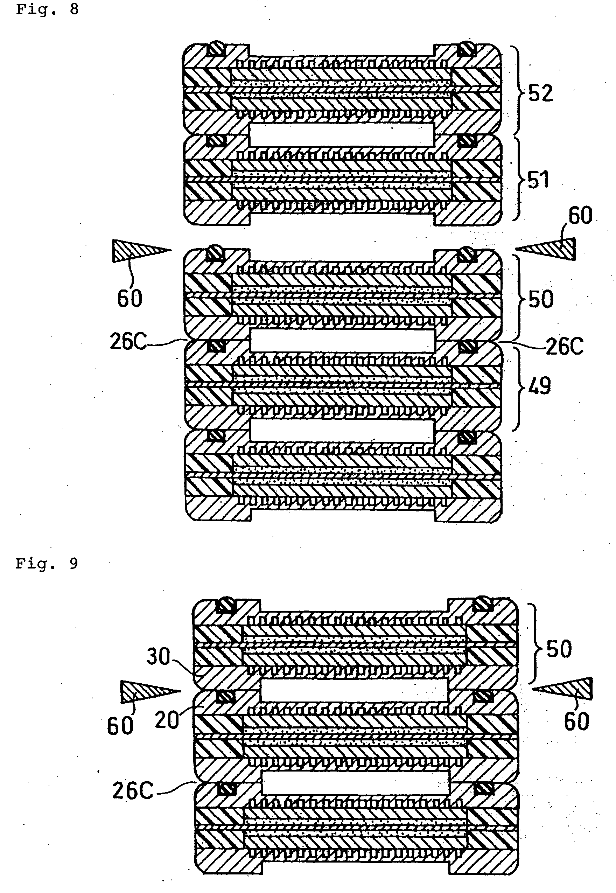

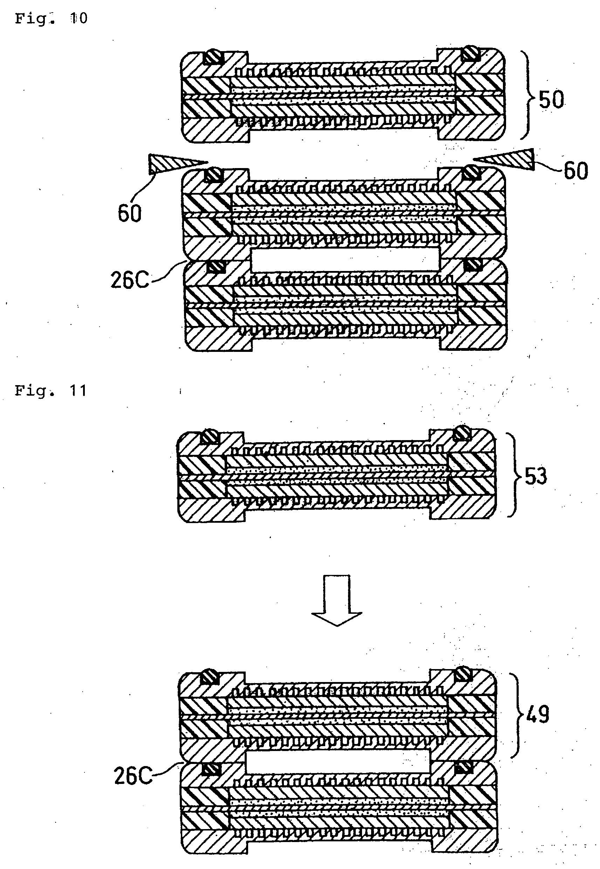

First, as shown in Figure 7, resinous, wedge-shaped replacement jig 60 is inserted from two opposing sides into the region of groove 26C, between the defective single cell and normal single-cell unit 51 located immediately above defective single-cell unit 50, which is composed of supper and lower separators. As shown in Figure 8, normal single-cell units 51 and 52 above the location where jig 60 was inserted are then removed. Next, as shown in Figure 9, replacement jig 60 is reinserted immediately below defective single-cell unit 50, and, as shown in Figure 10, defective single-cell unit 50 is removed. Next, as shown in Figure 11, previously manufactured replacement single-cell unit 53 is substituted. Finally, initially removed single-cell units 51 and 52 are mounted on single-cell unit 53. In this manner, the fuel cell stack is reconstructed.

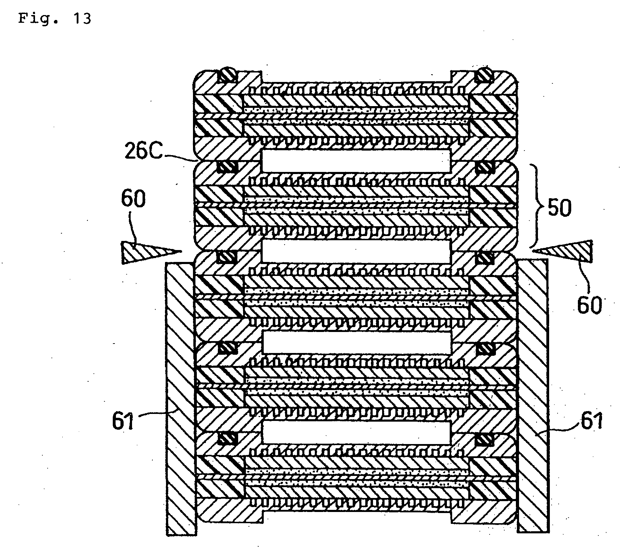

The replacement jig inserted here need not be wedge-shaped, but also may be any shape (e.g., a thin plate), as long as it conforms with the present invention. Regarding the material, also, a resin was used here after taking into consideration the load on the separators. However, the replacement jig also may be made of a metal, a ceramic, etc. Furthermore, concerns such as cell displacement preferably are reduced further by performing cell replacement after using holding jig 61 to hold the fuel cell units below defective single-cell unit 50, as shown in Figure 13.

In this manner, it is possible to provide a fuel cell that facilitates replacement of defective single cells, by providing a groove for inserting a jig between adjacent separators on a side in the direction of fuel cell lamination, and by simply processing into a separator shape with an extremely simple configuration.

### [Brief Explanation of Drawings]

Figure 1 shows a schematic, vertical, cross-sectional view of the polymer electrolyte fuel cell in one embodiment of the present invention.

Figure 2 shows a schematic, vertical, cross-sectional view of the polymer electrolyte fuel cell in another embodiment of the present invention.

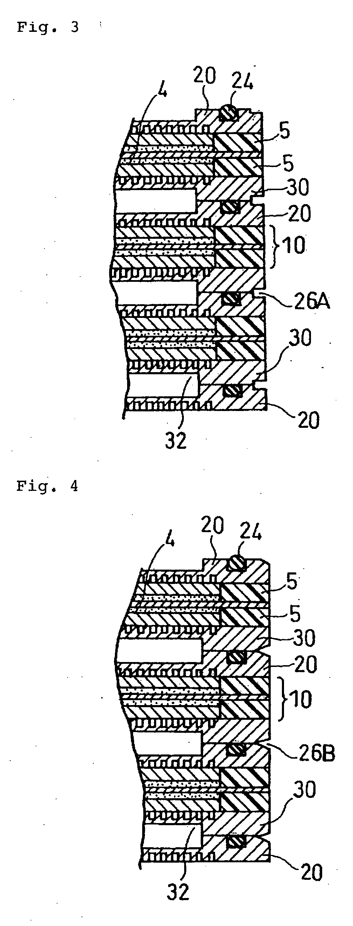

Figure 3 shows a general cross-sectional view of the principal parts of the polymer electrolyte fuel cell in yet another embodiment of the present invention.

Figure 4 shows a general cross-sectional view of the principal parts of the polymer electrolyte fuel cell in another embodiment of the present invention.

Figure 5 shows a general cross-sectional view of the principal parts of the polymer electrolyte fuel cell in yet another embodiment of the present invention.

Figure 6 shows a schematic, vertical, cross-sectional view of the polymer electrolyte fuel cell in another embodiment of the present invention.

Figure 7 shows a schematic, vertical, cross-sectional view of the fuel cell provided for cell replacement, based on the present invention.

Figure 8 shows a schematic, vertical, cross-sectional view showing the appearance during the removal of the cells above the defective cell.

Figure 9 shows a schematic, vertical, cross-sectional view showing the cells at the stage where the defective single cell is removed.

Figure 10 shows a schematic, vertical, cross-sectional view showing the appearance when removing the defective single cell.

Figure 11 shows a schematic, vertical, cross-sectional view showing the appearance when swapping the replacement cell for the defective single cell.

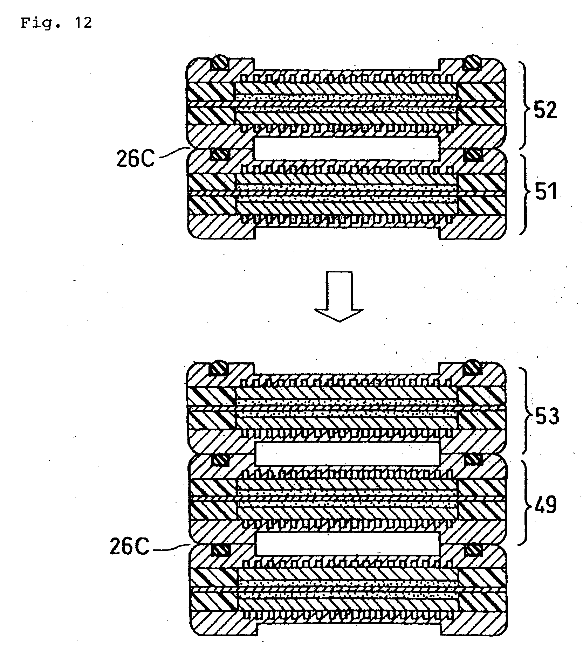

Figure 12 shows a schematic, vertical, cross-sectional view showing the appearance when remounting the cells that were above the defective cell.

Figure 13 shows a schematic, vertical, cross-sectional view showing the method used to replace a cell based on another embodiment of the present invention.

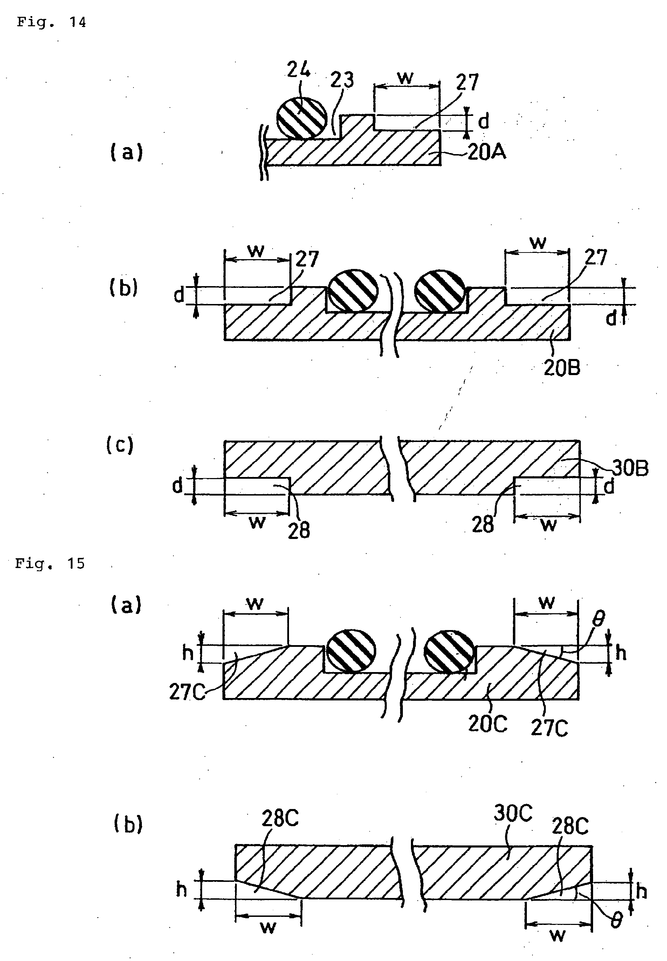

Figure 14 shows a cross-sectional view of the principal parts, showing an example of the configuration of the separator used in the embodiments of the present invention.

Figure 15 shows a cross-sectional view of the principal parts of the separator used in another embodiment of the present invention.

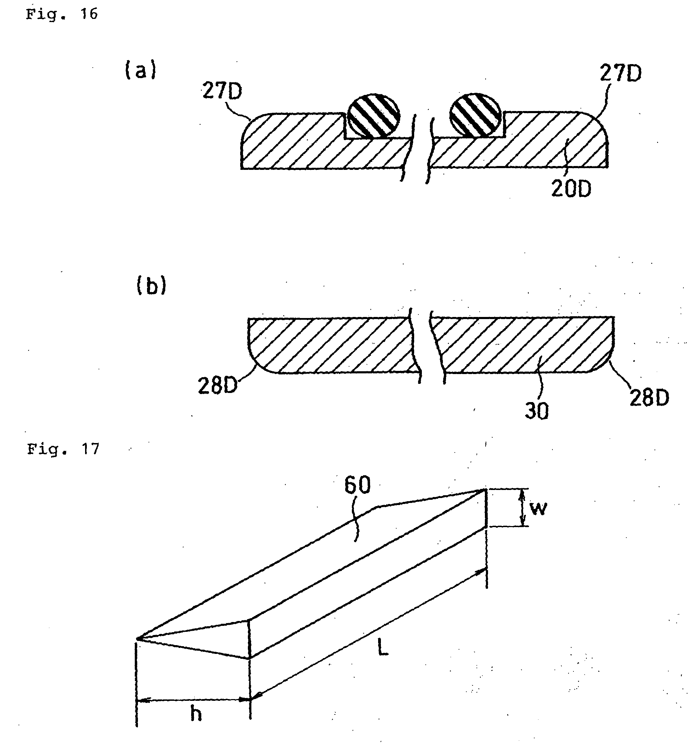

Figure 16 shows a cross-sectional view of the principal parts of the separator used in yet another embodiment of the present invention.

Figure 17 shows an oblique view of the jig used in the embodiments of the present invention.

### [Embodiments]

Next, embodiments of the present invention will be explained with reference to the drawings.

### [Embodiment 1]

The fuel cell of the present embodiment utilizes the configuration shown in Figure 1. Next, the single cell utilized as this fuel cell will be explained.

First, a single cell was constructed by coating both sides of a polymer electrolyte membrane with a catalyst layer, after which a fluorocarbon rubber gasket and carbon paper that becomes the gas diffusion layer were installed. The electrode size was 12 cm square and the single cell size was 18 cm square.

A single-cell unit was manufactured by enclosing this single cell between airtight carbon separators 20 and 30 (18 cm square, 3 mm thick). Fluorocarbon rubber O-ring 24 for maintaining airtightness was inserted into separator 20. Also, as shown by 27 in Figure 14(a), the side of this separator 20 was milled (depth (d): 0.6 mm; width (w): 2 mm).

Eighty of these single-cell units were laminated to create a fuel cell stack. Here, as shown in Figure 1, groove 26, which had a rectangular cross-sectional shape, was formed on one side of the fuel cell stack. In the present embodiment, the depth (d) and width (w) of the part processed to form a groove were fixed at specific values. However, other values also are selectable, and any shape could be used as long as the present invention is applicable. Furthermore, it could be modified in accordance with the shape of the used separator.

### [Embodiment 2]

For the fuel cell of the present embodiment, the configuration in Figure 2 was used. The single cell was the same as in Embodiment 1.

A single-cell unit was manufactured by enclosing this single cell between airtight carbon separators 20 and 30 (18 cm square, 3 mm thick). Fluorocarbon rubber O-ring 24 for maintaining airtightness was inserted into separator 20. Also, as shown by 27 in Figure 14(b), the opposing sides of this separator 20 were milled (depth (d): 0.6 mm; width (w): 2 mm).
Eighty of these single-cell units were laminated to create a fuel cell stack. Here, as shown in Figure 2, groove 26, which had a rectangular cross-sectional shape, was formed on two opposing sides of the fuel cell stack.

### [Embodiment 3]

The fuel cell used in the present embodiment had the configuration in Figure 3, and it had groove 26A on two sides. The single cell was the same as in Embodiment 1.

A single-cell unit was manufactured by enclosing this single cell between airtight carbon separators 20 and 30 (18 cm square, 3 mm thick). As shown by 28 in Figure 14 (c) , the opposing two sides of separators 20 and 30 were milled (depth (d): 0.6 mm; width (w): 2 mm).

Eighty of these single-cell units were laminated to create a fuel cell stack. Here, groove 26A, which had a rectangular cross-sectional shape, was formed on two opposing sides of the fuel cell stack.

### [Embodiment 4]

The fuel cell used in the present embodiment had the configuration in Figure 4, and it had groove 26B on two sides. The single cell was the same as that used in Embodiment 1.

A single-cell unit was manufactured by enclosing this single cell between airtight carbon separators 20 and 30 (18 cm square, 3 mm thick). As shown by 27C and 28C in Figures 15(a) and 15(b), respectively, the opposing two sides of separators 20 and 30 were chamfered (height (h): 0.8 mm; width (w): 2 mm; angle (θ): 45º).

Eighty of these single-cell units were laminated to create a fuel cell stack.

In the present embodiment, the chamfer height (h), width (w), and angle (θ) were fixed at specific values. However, other values also are selectable. Furthermore, the shapes of the two opposing sides were the same in the present embodiment, but they may differ. Also, the shapes of separators 20 and 30 also may vary. Moreover, the groove shape also may be modified in accordance with the shapes of the used separators. Also, in the present embodiment, only two sides were processed, but all four surfaces also may be processed. As long as the separator shape is at least quadrangular, each side may be processed.

### [Embodiment 5]

The used fuel cell of the present embodiment was structured so as to have radially milled groove 26C, as shown in Figure 5, instead of wedge-shaped groove 26B in Figure 4. This groove was formed by chamfering (R = 1.5 mm) separators 20 and 30, as shown by 27D and 28D in Figures 16(a) and 16(b), respectively. The other structures were identical to those in Embodiment 4.

### [Embodiment 6]

As shown in Figure 5, in the fuel cell of the present embodiment, the same groove 26C as in Embodiment 5 was formed every two single cells. The other structures were identical to those in Embodiment 5.

### [Embodiment 7]

The used fuel cell of the present embodiment had the structure in Figure 6. That is, it had a cooling block every two single cells, and it had groove 26C where there was a cooling block. The other structures were identical to those in Embodiment 1.

### [Embodiment 8]

In the present embodiment, the fuel cell of Embodiment 5 was used, and cell units were replaced by means of the method in Figures 7-12.

First, as shown in Figure 7, wedge-shaped replacement jigs 60 (height (h): 50 mm; base width (w): 20 mm; length (L): 200 mm) like the one shown in Figure 17 were inserted between defective single-cell unit 50 and single-cell unit 51 located above it, and single-cell units 51 and 52 above defective single-cell unit 50 were removed as in Figure 8. Next, as shown in Figure 9, replacement wedges 60 were inserted below defective single-cell unit 50, and defective single-cell unit 50 was removed (Figure 10). Then, single-cell unit 53 for replacement, which was prepared in advance, was mounted as in Figure 11. Finally, single-cell units 51 and 52 were restored, thereby reconstructing the fuel cell.

In this replacement operation, replacement jig 60 could be inserted easily via groove 26C. Also, no separator damage, etc., was observed. For comparison, an attempt was made to insert replacement jig 60 used in the present embodiment, between adjacent separators of a conventional grooveless fuel cell. However, it could not be inserted because there was almost no gap between separators. So, an attempt was made to insert by using a replacement jig with the same shape, but with metal used as the material of replacement jig 60. In this instance, although it eventually was insertable, the separator sides were chipped and cracked, which damaged the separators.

Next, cells could be replaced without problems when similar replacement was performed for the fuel cells of Embodiments 1-4. Furthermore, for the fuel cells of Embodiments 6 and 7, also, it was verified that cells could be replaced without problems by using a fuel-cell unit every two single cells.

In the present embodiment, the replacement jig materials were resin and metal, but ceramic materials, etc., also could be used. Furthermore, although a wedge shape was used, other shapes (e.g., sheet shape, thin-plate shape) may be used, and the size is not limited to that of the present embodiment.

### [Embodiment 9]

In the present embodiment, cells were replaced by using holding jig 61 of Figure 13, for the fuel cell of Embodiment 4.

The replacement method was the same as in Embodiment 8, except that the fuel cell first was held by holding jig 61, as in Figure 13. Here, because the fuel cells were held, replacement jig insertion was facilitated, and there was no displacement of normal cell units during the replacement operation.

### [Effects of the Invention]

According to the present invention, it is possible to provide a fuel cell that facilitates defective cell replacement, merely by processing a separator shape with an extremely simple configuration.

### [Explanation of Reference Signs]

- 1: Polymer electrolyte membrane
- 2: Catalyst layer
- 3: Diffusion layer
- 4: Electrode
- 5: Gasket
- 10: MEA
- 20, 30: Separators
- 21, 31: Gas flow channels
- 22, 32: Cooling water flow channels
- 24: O-ring
- 26, 26A, 26B, 26C: Trenches
- 50: Single defective cell unit
- 51, 52: Normal single cell units
- 53: Replacement single cell unit
- 60: Replacement jig
- 61: Holding jig

## Claims

1. A polymer electrolyte fuel cell comprising laminated multiple single cells composed of a solid polymer electrolyte membrane, a pair of electrodes sandwiching said solid polymer electrolyte membrane, an anode-side separator having a gas flow channel means for supplying fuel gas to one of said electrodes, and a cathode-side separator having a gas flow channel means supplying oxidant gas to the other of said electrodes,
**characterized by** the fact, that at least in the central portion of the polymer electrolyte fuel cell the following features are provided:
Between adjacent single cells and/or adjacent sequences of adjacent single cells pairs of said separators are provided in a decomposable manner,
and in at least some of said pairs at'least one external depression each is provided between adjacent separators, said external depressions fitting to a tool capable of decomposing said pair of separators.

2. The polymer electrolyte fuel cell described in claim 1 wherein said external depressions are external grooves.

3. The polymer electrolyte fuel cell described in claim 2, wherein said external groove extends in the direction of lamination of said fuel cell.

4. The polymer electrolyte fuel cell described in one of the claims 1 to 3, wherein said external depression is formed in only one separator of said pair of separators.

5. The polymer electrolyte fuel cell described in one of the claims 1 to 3, wherein said external depression is formed in two opposing sides of the separators of said pair of separators.

6. The polymer electrolyte fuel cell described in one of the claims 1 to 5, wherein more than one external depressions are distributed over the external sides of said pair of separators.

7. The polymer electrolyte fuel cell described in one of the claims 2 to 5, wherein at least some of said external grooves have a rectangular cross-sectional shape.

8. The polymer electrolyte fuel cell described in one of the claims 2 to 6, wherein at least some of said external grooves are wedge-shaped.

9. The polymer electrolyte fuel cell described in one of the claims 2 to 7, wherein said external grooves have curved sides.

10. The polymer electrolyte fuel cell described in one of the claims 1 to 9, wherein said external depressions are chamfered.

11. The polymer electrolyte fuel cell described in one of the claims 1 to 10, wherein at least the adjacent outer edges of the separators of said pair, preferably as well the outer edges of said separators of said pair which edges are adjacent to said electrodes, are chamfered.

12. The polymer electrolyte fuel cell described in one of the claims 2 to 10, wherein said external grooves are fitting to a jig.

13. The polymer electrolyte fuel cell described in one of the claims 1 to 12, wherein the separators of said pair are sealed by an intermediate O-ring.

14. A method of repairing a polymer electrolyte fuel cell in which one single cell at least has become defective
**characterized in that** said defective single cell or a sequence of cells including at least one defective single cell is separated from said fuel cell by decomposing adjacent pairs of separators with a fitting tool engaging at least one of said external depressions in said pair of separators as provided according to one of the claims 1 to 13.

15. A method of repairing a polymer electrolyte fuel cell in which one single cell at least has become defective, **characterized by** the steps,
that said defective single cell or a sequence of cells including at least one defective single cell is separated from said fuel cell by decomposing adjacent pairs of separators, and that a single replacement cell or a sequence of replacements cells in inserted in said fuel cell instead of said defective single cell or said sequence of cells including at least one defective single cell by means of a jig engaging at least one of external depressions as provided according to one of the claims 1 to 13 in said single replacement cell or said sequence of replacement cells.
